# EUROPEAN PATENT SPECIFICATION

(11) **EP 0 321 070 B1**
(45) Date of publication and mention of the grant of the patent: **24.07.1996**
(21) Application number: 88307776.0
(22) Date of filing: 23.08.1988
(51) Int. Cl.: G06T 7/00

(54) **Data/image acquisition system**
Daten/Bilder-Erfassungssystem
Système d'acquisition de données/d'images

(30) Priority: 15.12.1987 GB 8729252
(43) Date of publication of application: 21.06.1989
(73) Proprietor: NORTHERN TELECOM LIMITED, Montreal, Quebec H2Y 3Y4 (CA)
(72) Inventor: Downing, Anthony Harold, Saffron Walden Essex. CB11 4BJ (GB)
(74) Representative: Dennis, Mark Charles

(56) References cited:
- INFORMATION PROCESSING 83 PROCEEDINGS OF THE IFIP 9TH WORLD COMPUTER CONGRESS, Paris, 19th - 23rd September 1983, pages 169-172, R.E.A. MASON, North-Holland Publishing Co., Amsterdam, NL; T. YAMAMURA: "Automated label inspection apparatus"
- PATENT ABSTRACTS OF JAPAN, vol. 10, no. 135 (P-457), 20th May 1986; & JP-A-60 256 878
- PATENT ABSTRACTS OF JAPAN, vol. 11, no. 239 (P-602), 6th August 1987; JP-A-62 049 535

## Description

The present invention relates to a computing system in which data/image acquisition is needed. One application of such a system is in vision systems for use in industrial inspection and recognition systems.

In systems of the type referred to above, data is acquired via a television-type camera and placed in a memory for processing with a view to measurements being made, parts identified or missing components being noted. One system of this type is described in UK PATENT N°2187004B.

Such vision systems capture images from the TV system typically with a brightness range of 256 levels and resolutions of 512 lines each of 512 pixels. This needs a pixel digitation rate of 15 Mbytes per sec. Flash analogue-digital (A/D) converters can handle this throughput but the processors currently available have not been able to accept data at this rate. Two solutions have been used, framestores and direct memory access (DMA).

A framestore is a bank of high-speed memory to which the computer and image pixel addresses are multiplexed. During image acquisition, the memory addresses are those of each pixel position and the data from the A/D converter is written into the memory. On completion, the computer addresses the framestore at its own rate, either as part of a memory map or via an input/output port. Such a framestore concept is described in the proceedings of the 9th World Computer Congress 19^{th} to 23^{ed} September 1983, pages 169 to 172 "Automated Label Inspection", T. Yamamura, Fuji Electric Co. This requires complex memory control means. DMA simplifies the multiplexing by stopping the processor. The pixel addresses are placed on the address bus and the data acquired. The processor then restarts with the image in its main memory. Here also the processor has to wait until all of the image is in before it can do any processing.

An object of the invention is to provide a data/image acquisition method in which the disadvantages of the above indicated methods are minimised or even eliminated.

According to the invention, there is provided a data/image acquisition arrangement for a visual system, in which incoming video data is tested to determine which parts of the incoming data stream contain valid data, in which counting means under control of the incoming data stream determines address offsets which specifies line positions for such valid data, which offsets are applied to a processor, characterised in that the processor generates addresses at which the valid data is to be stored in memory means, in which said addresses are applied to a memory management unit (MMU) which controls the memory, in which said valid data is applied via a buffer to the MMU, and in which the MMU routes the data supplied to it from the buffer into locations in the memory means defined by said addresses, while the image to which the incoming data corresponds is re-created in the memory.

This exploits the availability of high performance 32 bit processors and in particular RISC (Reduced Instruction Set Computers) machines. The commercially available ARM (Acorn RISC Machine) chip set allows data transfers between its co-processor modules and memory at speeds in excess of 30 Mbytes per sec. Thus advantage is taken of this capability to allow image data to be acquired directly by the ARM chip set. Further, logic indicating the line currently digitised is used as an addressing offset, which eliminates the need to wait for the start of a new image frame to capture a complete static image. One advantage is low component count, as there is no framestore/external fast memory. Another advantage is the repeatedly high acquisition speeds as there is no variable length frame wait for line 0 field 0. Further, images are placed in virtual memory as the acquisition is under processor/memory management unit control. In addition, flexible, variable format data acquisition is possible, with the inclusion of buffer logic (see below) the image input and memory input are asynchronous, which allows alternative data formats and digitisation rates, e.g. 256 x 256, or 50/60 cycles.

An embodiment of the invention will now be described with reference to the accompanying highly schematic block diagram.

The arrangement shown uses a hybrid video digitiser - commercially available - which buffers a camera signal, extracts the synchronising pulses, generates pixel clock pulses, and samples and digitises the waveform into pixels. Such a device is shown at 1, with the sync separator feeding horizontal and vertical sync signals to pixel acquisition logic 2. This latter also receives the pixel timing signals from the block 1. All the lines of a video signal do not carry valid image data, so additional logic is used to identify a valid window in which data occurs. Signals which indicate such lines and also identify valid pixels appear respectively on the outputs from the block 2.

The valid line output goes to a line converter 3 from which the line identity is transmitted to a processor 4. The valid pixels output goes to a FIFO (First In First Out) buffer 5. This, with a data input from the block 1 enables the FIFO 5 to receive only valid data.

The processor 4 reads the contents of the pixel line counter 3 to identify which line of data is in the FIFO 5 and uses this line number as an address offset so that the image is recreated correctly in memory 6. Thus the processor 4 passes the addresses - determined with the aid of the address offset just mentioned - to a memory address management block 7. This also receives the data from the FIFO 5, and applies both data and addresses thus acquired to the memory 6.

The ARM processor used is pipelined so logic is needed to follow the instructions being executed. This uses the block 8, which receives its instructions from the processor 4. Its output goes to the FIFO 5. Thus the instructions for co-processor data transfer "tell" the ARM to generate addresses which are interpreted by the memory management unit 7, while the processor following logic 8 controls the output of the FIFO 5 to place pixel data on the data bus to the block 7, and therefrom into virtual memory.

The image thus recreated in the memory 6 is now available for processing and display as required.

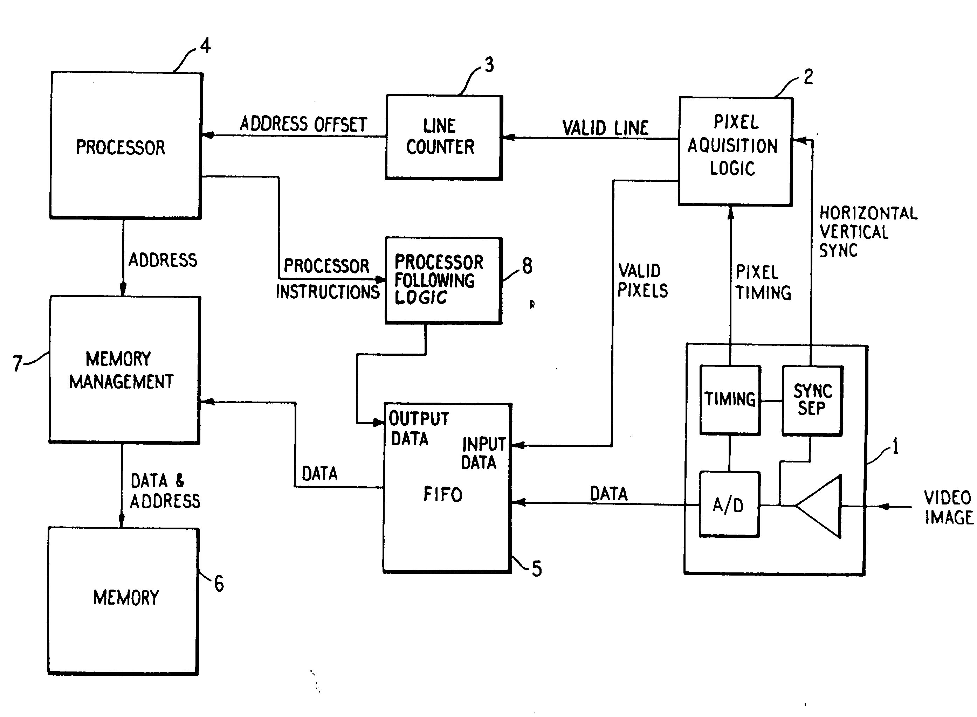

## Claims

1. A data/image acquisition arrangement for a visual system, in which incoming video data is tested to determine which parts of the incoming data streams contain valid data, in which counting means under control of the incoming data stream determines address offsets which specify positional information for such valid data, which offsets are applied to a processor (4), characterised in that the processor generates addresses at which the valid data is to be stored in memory means (6), in that said addresses are applied to a memory management unit (MMU) (7) which controls the memory, in that said valid data is applied via a buffer (5) to the MMU, and in that the MMU routes the data supplied to it from the buffer into locations in the memory means defined by said addresses, whereby the image to which the incoming data corresponds is re-created in the memory.

2. A data/images acquisition arrangement as claimed in claim 1, characterised in that the incoming video data is digitised to produce digital codes each of which relates to one pixel of the image for that data, and in which a first logic unit (2) identifies from the incoming data which groups of pixels each forming a line of the image contains valid data.

3. A data/image acquisition arrangement as claimed in claim 2, characterised in that a second logic unit (8) under the control of the processor applies signals to the FIFO buffer (5) to cause the lines of pixels to be output from the FIFO buffer (5) to the MMU.

## Patentansprüche

1. Daten-/Bild-Erfassungsanordnung für ein Abbildungssystem, bei dem ankommende Videodaten überprüft werden, um festzustellen, welche Teile der ankommenden Datenströme gültige Daten enthalten, wobei eine Zähleinrichtung unter der Steuerung des ankommenden Datenstroms Adressen-Offset-Werte bestimmt, die Positionsinformationen für diese gültigen Daten angeben, wobei diese Offset-Werte einem Prozessor (4) zugeführt werden,
dadurch **gekennzeichnet**,
daß der Prozessor Adressen erzeugt, an denen die gültigen Daten in Speichereinrichtungen (6) zu speichern sind, daß diese Adressen einer Speicherverwaltungseinheit (MMU) (7) zugeführt werden, die den Speicher steuert, daß die genannten gültigen Daten über einen Puffer (5) der MMU zugeführt werden, und daß die MMU die ihr von dem Puffer zugeführten Daten in durch die genannten Adressen definierte Speicherplätze in den Speichereinrichtungen lenkt, so daß das Bild, dem die ankommenden Daten entsprechen, in dem Speicher erneut geschaffen wird.

2. Daten-/Bild-Erfassungsanordnung nach Anspruch 1,
dadurch **gekennzeichnet**,
daß die ankommenden Videodaten digitalisiert werden, um digitale Codes zu erzeugen, die sich jeweils auf ein Pixel des Bildes für diese Daten beziehen, und daß eine erste Logikeinheit (2) aus den ankommenden Daten identifiziert, welche Gruppen von Pixeln, die jeweils eine Zeile des Bildes bilden, gültige Daten enthalten.

3. Daten-/Bild-Erfassungsanordnung nach Anspruch 2,
dadurch **gekennzeichnet**,
daß eine zweite Logikeinheit (8) unter der Steuerung des Prozessors Signale an den FIFO-Puffer (5) anlegt, um zu bewirken, daß Zeilen von Pixeln von dem FIFO-Puffer (5) an die MMU abgegeben werden.

## Revendications

1. Ensemble d'acquisition de données-image destiné à un système visuel, dans lequel les données vidéo reçues sont testées pour la détermination des parties des courants de données vidéo reçues qui contiennent des données valables, dans lequel un dispositif de comptage commandé par le courant de données reçues détermine les décalages des adresses qui spécifient l'information de position de ces données valables, les décalages étant appliqués à un processeur (4), caractérisé en ce que le processeur crée des adresses auxquelles les données valables doivent être conservées dans un dispositif (6) à mémoire, les adresses sont appliquées à une unité (7) de gestion de mémoire (MMU) qui commande la mémoire, les données valables sont appliquées par un circuit tampon (5) à l'unité de gestion de mémoire, et l'unité de gestion de mémoire achemine les données qui lui sont transmises du circuit tampon à des emplacements du dispositif de mémoire qui sont définis par ces adresses, si bien que l'image à laquelle correspondent les données reçues est recréée dans la mémoire.

2. Ensemble d'acquisition de données-image selon la revendication 1, caractérisé en ce que les données vidéo reçues sont numérisées afin qu'elles forment des codes numériques qui sont liés chacun à un élément d'image de l'image correspondant à ces données, et dans lequel une première unité logique (2) identifie, d'après les données reçues, des groupes d'éléments d'image formant chacun une ligne de l'image qui contient des données valables.

3. Ensemble d'acquisition de données-image selon la revendication 2, caractérisé en ce qu'une seconde unité logique (8) qui est sous la commande du processeur applique des signaux au circuit tampon à file (5) afin que les lignes d'éléments d'image soient transmises par le circuit tampon à file (5) à l'unité de gestion de mémoire.
